# EUROPÄISCHE PATENTSCHRIFT

(11) **EP 0 787 682 B1**
(45) Veröffentlichungstag und Bekanntmachung des Hinweises auf die Patenterteilung: **13.01.1999**
(21) Anmeldenummer: 96119351.3
(22) Anmeldetag: 03.12.1996
(51) Int. Cl.: C01B 15/10

(54) **Verfahren zur Herstellung von Natriumpercarbonat in Granulatform**
Process for the preparation of sodium percarbonate granules
Procédé de préparation de percarbonate de sodium en granules

(30) Priorität: 05.02.1996 DE 19603849
(43) Veröffentlichungstag der Anmeldung: 06.08.1997
(73) Patentinhaber: Glatt Ingenieurtechnik GmbH, D-99427 Weimar (DE)
(72) Erfinder: Rümpler, Karlheinz, Dr.-Ing., 99425 Weimar (DE); Prahl, Wolfgang, Dipl.-Ing., 99425 Weimar (DE); Willert, Olaf, Dipl.-Ing., 99427 Weimar (DE); Wand, Bernhard, Dipl.-Ing., 99510 Apolda (DE); Böber, Reinhard, Dipl.-Ing., 99425 Weimar (DE); Nowak, Reinhard, Dipl.-Ing., 79589 Binzen (DE)
(74) Vertreter: Schmitt, Hans, Dipl.-Ing.

(56) Entgegenhaltungen:
- DE-A- 2 733 935
- DE-A- 4 329 205
- FR-A- 2 076 430

## Beschreibung

Die Erfindung betrifft ein Verfahren zur Herstellung von Natriumpercarbonat in Granulatform in einer mit arteigenem Material versehenen Wirbelschicht.

Gemäß der DE 20 60 971 erfolgt eine Herstellung von Natriumpercarbonat entsprechend der Formel 2 Na₂CO₃ x 3 H₂O₂ mittels Wirbelschicht-Sprühgranulation, wobei eine Wasserstoffperoxid- und eine Sodalösung in einer Wirbelschichtapparatur auf Natriumpercarbonatkeime gesprüht werden und gleichzeitig Wasser verdampft wird.

Nachteilig bei diesem Verfahren ist, daß bei Verwendung von zwei getrennten Sprühdüsen zur Einbringung einer wäßrigen Wasserstoffperoxid-und einer wäßrigen Natriumcarbonatlösung unter Mitverwendung von Luft als Treibgas eine innige Mischung der beiden Lösungen schwierig erreichbar ist. Eine innige Mischung der beiden Lösungen wird aber für den Erhalt von homogenen Natriumpercarbonatpartikel benötigt. Werden jedoch die beiden Lösungen gemeinsam durch ein und dieselbe Einspritzdüse in die Wirbelschicht eingebracht, erfolgt nach meist kurzer Betriebszeit in der Einspritzdüse eine Kristallisation, was zu Verstopfungen führt und Betriebsunterbrechungen zur Folge hat.

Die Vermeidung von Kristallisationen in der Einspritzdüse, die gleichzeitig mit einer wäßrigen Wasserstoffperoxid- und einer wäßrigen Natriumcarbonatlösung beaufschlagt wird, erfolgt gemäß DE 27 33 935 durch Zugabe von Metaphosphat in einer der beiden Lösungen.

Nachteilig hierbei ist, daß einerseits die Rohstoffkosten erhöht werden und andererseits mit dem Phosphat eine umweltschädigende Komponente in das Endprodukt eingebracht wird.

In der DE 43 29 205 wird ein Verfahren zur Herstellung von granulatförmigem Natriumpercarbonat durch Wirbelschicht-Sprühgranulation beschrieben, bei dem eine wäßrige Wasserstoffperoxidlösung und eine wäßrige Natriumcarbonatlösung mit Hilfe einer einzigen Sprühdüse ohne Verwendung von phosphorhaltigen Kristallisationsinhibitoren in eine Keime enthaltene Wirbelschicht gesprüht wird, wobei als Sprühdüse eine Dreistoffzerstäubungsdüse mit externer Mischung der Lösungen verwendet wird. Durch die Mischung der beiden Lösungen außerhalb der Düse und daran anschließender Bildung des Natriumpercarbonats wird eine Verstopfung der Düse vermieden.

Nachteilig bei diesem Verfahren ist, daß verhältnismäßig viel Wärmeenergie für die Verdampfung des bei der Zuführung der wäßrigen Ausgangslösungen enthaltenen Wassers in die Wirbelschicht benötigt wird. Außerdem wird durch den hohen Wasseranteil der Massendurchsatz durch die Produktionsanlage reduziert. Ein weiterer wesentlicher Nachteil dieses Verfahrens besteht darin, daß beim Austrag des Materials aus der Wirbelschicht auch große Mengen an feinteiligem Material, das noch nicht die gewünschte Endgröße besitzt, mit ausgetragen werden. Dieses Material wird der Wirbelschicht als Keime wieder zurückgeführt. Durch diesen Materialkreislauf werden die nachgeschalteten Aggregate zusätzlich belastet, das heißt, sie müssen größer dimensioniert werden, und der Energiebedarf wird erhöht. Außerdem muß eine Regelung der Rückführungsmenge des feinteiligen Materials vorgenommen werden. Im Falle der Rückführung einer zu großen Menge an sehr feinteiligem Material als Keime kann es zu einem zu geringen Partikelwachstum, im Falle einer zu hohen Feuchte durch zu wenig vorhandene Keime in der Wirbelschicht kommt es zu einer unerwünschten Aggregatbildung.

Die Aufgabe der Erfindung besteht darin, ein Verfahren zur Herstellung von granulatförmigem Natriumpercarbonat der Formel 2 Na₂CO₃ x 3 H₂O₂ mit Eindüsung und externer Mischung der Ausgangsstoffe mittels Zerstäubungsdüsen in den vorzugsweise unteren Bereich einer mit arteigenem Material beaufschlagten und mit klassierendem Fertiggutabzug versehenen Wirbelschicht aufzuzeigen, das gegenüber den bekannten Verfahren eine verbesserte Ökonomie hinsichtlich einer Reduzierung der benötigten Wärmeenergie im Granulationsprozeß sowie eine Verkleinerung der Produktionsanlage bei gleichem Massendurchsatz aufweist, sowie eine zielgerichtete Steuerung der Granulatkorngröße ohne aufwendigen Regelmechanismus ermöglicht und die aufgezeigten Nachteile der bekannten Verfahren nicht aufweist.

Die Aufgabe wird erfindungsgemäß mit den Merkmalen des Anspruches 1 gelöst. Vorteilhafte Ausgestaltungen des Verfahrens sind in den Unteransprüchen angegeben.

Das erfindungsgemäße Verfahren zur Herstellung von Natriumpercarbonat in Granulatform erfolgt in einer an sich bekannten Wirbelschicht mit einem klassierenden Abzug, so daß nur das Endprodukt ausgetragen wird, das die gewünschte Mindestgranulatgröße besitzt. Zu kleine Körner werden durch einen definierten Luft- Gasstrom in die Wirbelschicht zurück transportiert.

Die für die Herstellung des Natriumpercarbonates benötigten Ausgangsstoffe, eine an sich bekannte wäßrige Lösung von Wasserstoffperoxid mit einem Wasserstoffperoxidgehalt von 30 bis 70 % und eine Suspension von Natriumcarbonat mit einem Natriumcarbonatgehalt bis zu 70 % , wobei ein Teil des Natriumcarbonates bis zur Sättigung in Lösung und darüber hinaus als suspendierter Feststoff vorliegt, werden mittels einer oder mehrerer Vierwegzerstäubungsdüsen in den vorzugsweise unteren Bereich einer mit arteigenem Material beaufschlagten Wirbelschicht eingedüst. Dabei erfolgt eine externe Mischung der Ausgangsstoffe außerhalb der Zerstäubungsdüsen.

Kristallines Natriumpercarbonat kann auch mit der Verdüsungsluft über den Ringspalt zwischen dem Zentralrohr und dem ersten Hüllrohr bzw. mit der Natriumcarbonatsuspension im Ringspalt zwischen dem ersten und dem zweiten Hüllrohr als Feststoff in den Reaktionsraum eingebracht werden. Durch die Erhöhung des Feststoffgehaltes in der Natriumcarbonatsuspension wird die zu verdampfende Wassermenge kleiner, was ökonomisch Vorteile bedeutet. Die suspendierten Feststoffpartikel in der Natriumcarbonatlösung und die Feststoffteilchen im Sprühmedium beeinflussen positiv eine kontrollierte Reaktion zwischen Wasserstoffperoxid und Natriumcarbonat zu Natriumpercarbonat im Mündungsgebiet außerhalb der Düse. Es wurde überraschenderweise gefunden, daß die Steuerung der Granulatkorngröße u.a. mit dem Feststoffanteil in der Natriumcarbonatsuspension zielgerichtet möglich ist.

Zur Erhöhung der Stabilität beider Ausgangslösungen, der zielgerichteten Einflußnahme auf die Reaktion zwischen den beiden Komponenten und auf die Kornausbildung und zur Stabilität des Produktes können an sich bekannte Zusatzstoffe den Ausgangsstoffen zugeführt werden.

Die Vierwegzerstäubungsdüse besteht aus einem mittig angeordneten zentralen Rohr, dem drei koaxial angeordnete Hüllrohre zugeordnet sind. Am Düsenmundstück entsteht somit ein mittig angeordneter kreisrunder Austritt, um den konzentrisch drei kreisförmige Austritte angeordnet sind. Die Vorzugsvariante sieht vor, daß dem inneren Rohr die Wasserstoffperoxidlösung, dem Ringspalt zwischen innerem Rohr und erstem Hüllrohr die Verdüsungsluft mit Natriumpercarbonatfeststoffteilchen, dem Ringspalt zwischen dem ersten und zweiten Hüllrohr die Natriumcarbonatsuspension und dem Ringspalt zwischen dem zweiten und dritten Hüllrohr die Verdüsungsluft zugeführt wird. Alle Rohre enden in Richtung Düsenmundstück in einer Ebene oder können im Interesse einer zielgerichteten Vermischung und Beherrschung von Feststoffansätzen in unterschiedlichen Ebenen enden.

Die Anordnung der Luftzuführung nutzt die Vorteile einer Zweistoffverdüsung, indem hinreichend Luft für jede zu verdüsende Flüssigkeitskomponente vorhanden ist, an dem Ort, wo sie benötigt wird. Gleichzeitig werden auf engstem Raum im Bereich des Düsenaustritts außerhalb der Düse beide Flüssigkeiten zusammengeführt und können miteinander reagieren. Die Luft im Ringspalt zwischen Zentralrohr und dem ersten Hüllrohr erzeugt die kinetische Energie zur Verdüsung der Flüssigkeit und kann Feststoffpartikel in den Reaktionsbereich einbringen, während die Luft im Ringspalt zwischen dem zweiten und dritten Hüllrohr die kinetische Energie zur Verdüsung der Flüssigkeit erzeugt und den Reaktionsbereich vor der Düse von der Umgebung der Wirbelschicht abgrenzt, um die Reaktion hier ungestört durchführen zu können.

Die Vorteile des erfindungsgemäßen Verfahrens bestehen in der Reduzierung der benötigten Wärmeenergie beim Granulationsprozeß durch Senkung der zu verdampfenden Wassermenge. Dadurch kann gleichzeitig bei gleichem Massendurchsatz die Produktionsanlage verkleinert werden. Ein weiterer Vorteil des erfindungsgemäßen Verfahrens besteht darin, daß die Steuerung der Granulatkorngröße mit den zugeführten Feststoffteilchen in der Natriumcarbonatsuspension und in der Verdüsungsluft zielgerichtet möglich ist.

Durch den Einsatz der Vierwegzerstäubungsdüsen werden die Vorteile einer Zweistoffverdüsung und der Abgrenzung des Reaktionsbereiches vor der Düse von der Umgebung der Wirbelschicht gleichzeitig genutzt.

Die Erfindung wird anhand eines Ausführungsbeispiels näher erläutert. In der dazugehörigen Zeichnung ist der Schnitt durch eine Vierwegzerstäubungsdüse dargestellt.

Zur Herstellung von Natriumpercarbonat der Formel 2 Na₂CO₃ x 3 H₂O₂ in Granulatform werden in den unteren Bereich einer Wirbelschicht über eine Vierwegzerstäubungsdüse 1 die Ausgangskomponenten wie folgt eingedüst.

Über das Zentralrohr 2 werden 35 kg/h wäßrige Wasserstoffperoxidlösung mit einem Wasserstoffperoxidgehalt von 50 % eingedüst. Durch den Ringspalt 3 zwischen dem Zentralrohr 2 und dem ersten Hüllrohr wird Verdüsungsluft zugeführt, wobei die Vorteile einer Zweistoffverdüsung genutzt werden. In den Ringspalt 4 zwischen dem ersten und zweiten Hüllrohr werden 95 kg/h wäßrige Natriumcarbonatsuspension mit einem Natriumcarbonatgehalt von 36,5 % aufgegeben. In den Ringspalt 5 zwischen dem zweiten und dem dritten Hüllrohr wird ebenfalls Verdüsungsluft zugeführt, die die kinetische Energie zur Verdüsung der Flüssigkeit erzeugt und den Reaktionsbereich vor der Düse von der Umgebung der Wirbelschicht abgrenzt, um die Reaktion nicht negativ zu beeinflussen.

Es wurden 52 kg/h granuliertes Natriumpercarbonat mit einem Wasserstoffperoxidgehalt von 32,1 %, einem Kornband von 0,2 bis 1,6 mm, einer Feuchte von 1,0 % und einer Schüttdichte von 1000 g/l hergestellt. Bei Vergrößerung der Natriumcarbonatkonzentration in der Natriumcarbonatsuspension auf 40 % reduzierte sich die Korngröße des Natriumpercarbonatgranulates im Mittel um 10 %.

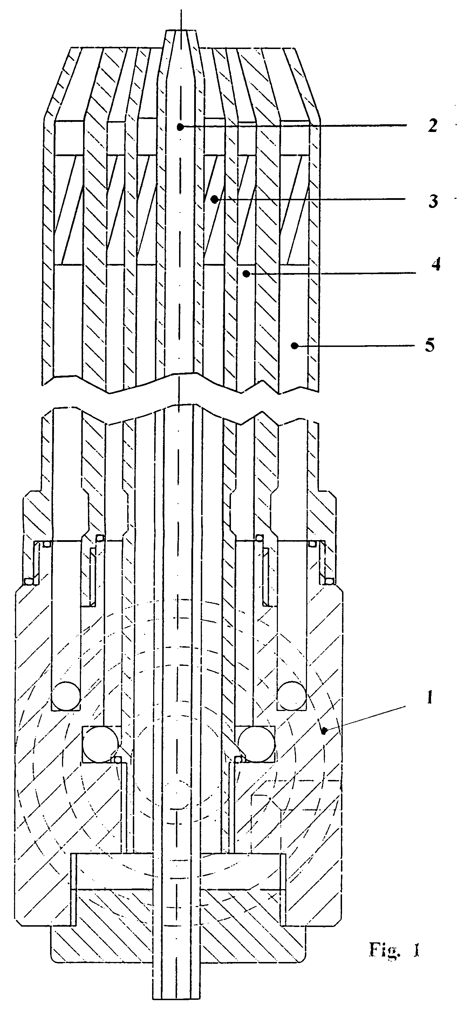

## Patentansprüche

1. Verfahren zur Herstellung von Natriumpercarbonat in Granulatform durch Eindüsung und externer Mischung der Ausgangsstoffe mittels Zerstäübungsdüsen in den vorzugsweise unteren Bereich einer mit arteigenem Material beaufschlagten und mit klassierendem Fertiggutabzug versehenen Wirbelschicht, wobei als Ausgangsstoff eine wäßrige Lösung von Wasserstoffperoxid mit einem Wasserstoffperoxidgehalt von 30 bis 70 % und eine wäßrige Lösung von Natriumcarbonat verwendet werden, **dadurch gekennzeichnet**, daß als Ausgangsstoffe neben der an sich bekannten wäßrigen Lösung von Wasserstoffperoxid mit einem Wasserstoffperoxidgehalt von 30 bis 70 % eine Suspension von Natriumcarbonat mit einem Natriumcarbonatgehalt bis zu 70 % verwendet wird, wobei ein Teil des Natriumcarbonates bis zur Sättigung in Lösung und darüber hinaus als suspendierter Feststoff vorliegt, und daß zum Versprühen der Ausgangsstoffe eine Vierwegzerstäubungsdüse verwendet wird, bei der um ein mittig angeordnetes Zentralrohr drei koaxial angeordnete Hüllrohre angeordnet sind, wobei dem inneren Rohr die Wasserstoffperoxidlösung, dem zwischen dem Zentralrohr und dem ersten Hüllrohr entstehenden Ringspalt die Verdüsungsluft, dem zwischen dem ersten und dem zweiten Hüllrohr entstehenden Ringspalt die Natriumcarbonatsuspension und dem zwischen dem zweiten Hüllrohr und dem dritten Hüllrohr entstehenden Ringspalt die Verdüsungsluft zugeführt werden.

2. Verfahren nach Anspruch 1, dadurch gekennzeichnet, daß kristalline Natriumpercarbonatteilchen mit dem Sprühmedium, z.B. der Sprühluft, dem Reaktionsraum zugeführt werden.

3. Verfahren nach Anspruch 1 und 2, dadurch gekennzeichnet, daß mit der Verdüsungsluft im Ringspalt zwischen dem Zentralrohr und dem ersten Hüllrohr der Vierwegzerstäubungsdüse kristalline Natriumpercarbonatteilchen dem Reaktionsraum der Wirbelschicht zugeführt werden.

4. Verfahren nach Anspruch 1 bis 3, dadurch gekennzeichnet, daß in der Natriumcarbonatsuspension kristallines Natriumpercarbonat bis zu einem Anteil von 50 % des Gesamtfeststoffes suspendiert ist.

5. Verfahren nach Anspruch 1 bis 4, dadurch gekennzeichnet, daß eine oder mehrere Vierwegdüsen die Ausgangsstoffe in, gegen und/oder quer zur Strömungsrichtung des Trocknungsmediums verdüsen.

## Claims

1. Process for producing sodium percarbonate in granulated form by externally mixing the starting materials and spraying them using atomiser nozzles into preferably the lower area of a fluidised bed subjected to the action of a characteristic material and provided with a sorting discharge means for the finished material, the starting materials used being an aqueous solution of hydrogen peroxide with a hydrogen peroxide content of 30 to 70% and an aqueous solution of sodium carbonate, characterised in that as starting materials, in addition to the aqueous solution of hydrogen peroxide known per *se* having a hydrogen peroxide content of from 30 to 70%, a suspension of sodium carbonate with a sodium carbonate content of up to 70% is used, some of the sodium carbonate being in solution up to saturation point and the remainder being in the form of a suspended solid, and in that, for spraying the starting materials, a four-way atomiser nozzle is used in which three coaxially mounted sleeve tubes are arranged around a centrally positioned central tube, the hydrogen peroxide solution being fed into the inner tube, the atomising air being fed into the annular gap between the central tube and the first sleeve tube, the sodium carbonate suspension being fed into the annular gap between the first and second sleeve tubes and the atomising air being fed into the annular gap between the second and third sleeve tubes.

2. Process according to cliam 1, characterised in that crystalline sodium percarbonate particles are fed into the reaction chamber with the spraying medium, e.g. the sprayed air.

3. Process according to claims 1 and 2, characterised in that crystalline sodium percarbonate particles are fed into the reaction chamber of the fluidised bed with the atomising air in the annular gap between the central tube and the first sleeve tube of the four-way atomiser nozzle.

4. Process according to claims 1 to 3, characterised in that crystalline sodium percarbonate is suspended in the sodium carbonate suspension in an amount of up to 50% of the total solids.

5. Process according to claims 1 to 4, characterised in that one or more four-way nozzles spray the starting materials into, counter to and/or transversely to the direction of flow of the drying medium.

## Revendications

1. Procédé de préparation de percarbonate de sodium en granules par passage en buse et mélange externe des matériaux de départ au moyen de buses d'atomisation dans la zone, de préférence inférieure, d'une couche fluidisée pourvue d'un dispositif de décharge avec tri et chargée d'un matériau spécifique à sa nature, dans lequel on utilise comme matériau de départ une solution aqueuse de peroxyde d'hydrogène présentant une teneur en peroxyde d'hydrogène comprise entre 30 et 70 % et une solution aqueuse de carbonate de sodium, **caractérisé en ce que** l'on utilise comme matériau de départ, outre la solution aqueuse connue en soi de peroxyde d'hydrogène présentant une teneur en peroxyde d'hydrogène comprise entre 30 et 70 %, une suspension de carbonate de sodium présentant une teneur en carbonate de sodium allant jusqu'à 70 %, où une partie du carbonate de sodium se présente jusqu'à saturation en solution et au-delà sous la forme de solides en suspension, et en ce qu'on utilise, pour atomiser les matériaux de départ, une buse d'atomisation à quatre voies, dans laquelle, autour d'un tube central situé dans la partie médiane, sont disposées trois gaines de façon coaxiale, la solution de peroxyde d'hydrogène étant amenée dans le tube intérieur, l'air d'atomisation étant amené dans le passage annulaire formé entre le tube central et la première gaine, la suspension de carbonate de sodium étant amenée dans le passage annulaire formé entre la première et la seconde gaine, et l'air d'atomisation étant amené dans le passage annulaire formé entre la seconde et la troisième gaine.

2. Procédé selon la revendication 1, caractérisé en ce que des particules de percarbonate de sodium cristallines sont introduites dans la zone de réaction par le moyen de pulvérisation, par exemple par l'air de pulvérisation.

3. Procédé selon les revendications 1 et 2, caractérisé en ce qu'avec l'air d'atomisation dans le passage annulaire formé entre le tube central et la première gaine de la buse d'atomisation à quatre voies sont introduites dans l'espace de réaction de la couche fluidisée des particules de percarbonate de sodium cristallines.

4. Procédé selon les revendications 1 à 3, caractérisé en ce que du percarbonate de sodium cristallin jusqu'à une quantité représentant 50 % de la teneur totale en solides est mis en suspension dans la suspension de carbonate de sodium.

5. Procédé selon les revendications 1 à 4, caractérisé en ce qu'une ou plusieurs buses à quatre voies atomisent les matériaux de départ dans la même direction, dans la direction inverse et/ou dans la direction transversale à la direction d'écoulement du milieu déshydratant.
